# EUROPEAN PATENT SPECIFICATION

(11) **EP 4 028 841 B1**
(45) Date of publication and mention of the grant of the patent: **15.05.2024**
(21) Application number: 20771677.0
(22) Date of filing: 27.08.2020
(51) Int. Cl.: G05B 23/02, G06N 3/02, G06N 3/045, G06N 3/08

(54) **SYSTEMS AND METHODS FOR DETECTING WIND TURBINE OPERATION ANOMALY USING DEEP LEARNING**
SYSTEME UND VERFAHREN ZUR ERKENNUNG EINES ANOMALEN WINDTURBINENBETRIEBS UNTER VERWENDUNG VON TIEFENLERNEN
SYSTÈMES ET PROCÉDÉS DE DÉTECTION D'ANOMALIE DE FONCTIONNEMENT D'ÉOLIENNE À L'AIDE D'UN APPRENTISSAGE PROFOND

(30) Priority: 09.09.2019 US 201962897774 P
(43) Date of publication of application: 20.07.2022
(73) Proprietor: General Electric Renovables España, S.L., 08005 Barcelona (ES)
(72) Inventor: ZHANG, Zhanpan, Niskayuna, NY 12309 (US); ZHAO, Guangliang, Niskayuna, NY 12309 (US); XIA, Jin, Niskayuna, NY 12309 (US); MIHOK, John, Niskayuna, NY 12309 (US); GREGG, Peter Alan, Niskayuna, NY 12309 (US); BOUQATA, Bouchra, Niskayuna, NY 12309 (US)
(74) Representative: Zimmermann & Partner Patentanwälte mbB
(86) International application number: PCT/US2020/048223
(87) International publication number: WO 2021/050285

(56) References cited:
- US-A1- 2011 313 726
- US-A1- 2017 024 649
- Elliot Pickens: "Graphical Inference with Convolutional Neural Networks", 2019 Spring USRESP Winners, 31 March 2019 (2019-03-31), pages 1-8, XP055753181, Retrieved from the Internet: URL:https://www.causeweb.org/usproc/sites/ default/files/usresp/2019-1/Graphical%20In ference%20with%20Convolutional%20Neural%20 Networks.pdf [retrieved on 2020-11-23]
- LANGARICA SAUL ET AL: "An Industrial Internet Application for Real-Time Fault Diagnosis in Industrial Motors", IEEE TRANSACTIONS ON AUTOMATION SCIENCE AND ENGINEERING, IEEE SERVICE CENTER, NEW YORK, NY, US, vol. 17, no. 1, 15 May 2019 (2019-05-15), pages 284-295, XP011765099, ISSN: 1545-5955, DOI: 10.1109/TASE.2019.2913628 [retrieved on 2020-01-10]

## Description

### BACKGROUND

The field of the present disclosure generally relates to industrial assets, and more particularly, to aspects of systems and methods to provide anamoly detection for the industrial assets and an identification of root causes corresponding to the detected anamoly.

To control normal operation of an industrial asset such as a wind turbine, traditional process control methods have been used to monitor the time series of sensor measurements and generate alerts when outliers are detected. However, different root causes may exist that can lead to abnormal sensor measurements. As an example, high tower acceleration measurements may be caused by one or more of blade misalignment, blade imbalance, incorrect control parameter, and sensor hardware issue, etc. To identify the specific root cause in conventional methods, it requires a manual diagnostic process to distinguish outlier patterns. The manual process is limited to relatively simple outlier patterns and is thus plagued by results with relatively high uncertainty. Patent application US 2011/313726 A1 describes a condition-based maintenance system for wind turbines. Patent application
US 2017/024649 A1 refers to an anomaly detection system and method for industrial asset. Elliot Pickens refers to convolutional neural networks in the article "Graphical Interference with Convolutional Neural Networks", 2019 Spring USRESP Winners, 31 March 2019, pages 1-8, XP055753181; and Langarica Saul et al. describe an industrial internet application in industrial motors in the article "An industrial Internet Application from Real-Time Fault Diagnosis in Industrial motors", IEEE Transactions on automation science and engineering, IEEE Service Center, New York, NY, US, vol. 17, no.1, 15 May 2019, pages 284-285, XP011765099.

Accordingly, in some respects, a need exists for methods and systems that provide an efficient and accurate deep learning model to automatically detect anomalies and identify the corresponding root causes thereof with high model accuracy.

The invention is defined by the claims.

### BRIEF DESCRIPTION OF THE DRAWINGS

FIG. 1 is a schematic block diagram of an example system that may be associated with some embodiments herein;
FIG. 2 is a block diagram of a wind turbine system that may be associated with some embodiments herein;
FIG. 3 is a block diagram of an overall example system in accordance with some embodiments;
FIG. 4 is an illustrative system architecture in accordance with embodiments;
FIGS. 5A and 5B are illustrative scatter plots of sensor data for a wind turbine, in accordance with some embodiments herein;
FIG. 6 is a flow diagram of an illustrative process in accordance with some embodiments;
FIG. 7 is an illustrative example of some aspects of an image generation and root cause identification process in accordance with some embodiments;
FIG. 8 is an illustrative example representation of data associated with labelling images in accordance with some embodiments;
FIG. 9 is an illustrative example of some aspects associated with generating labeled images in accordance with some embodiments;
FIG. 10 is an illustrative example of some aspects of label synchronization associated with generating a deep learning model in accordance with some embodiments;
FIG. 11 is an illustrative example of some aspects associated with anomaly image generation in accordance with some embodiments;
FIG. 12 is a block diagram illustrating an anomaly detection and root cause identification process using a deep learning model, in accordance with some embodiments;
FIGS. 13 - 15 are illustrative examples of an anomaly detection and root cause identification by a deep learning model in accordance with some embodiments.
FIG. 16 is an illustrative example of some aspects associated with training data labeling in accordance with some embodiments;
FIG. 17 is an illustrative example of some aspects associated with training data labeling in accordance with some embodiments;
FIG. 18 is an illustrative example of a continuous improvement cycle that may be used in accordance with some embodiments;
FIG. 19 is an illustrative example of some aspects associated with retraining a model in a continuous improvement cycle in accordance with some embodiments;
FIG. 20 illustrates an extension of some aspects of the present disclosure to other applications and contexts in accordance with some embodiments;
FIG. 21 is an apparatus that may be provided in accordance with some embodiments; and
FIG. 22 is a tabular view of a portion of a sensor database in accordance with some embodiments of the present invention.

### DETAILED DESCRIPTION

Reference will now be made in detail to present embodiments of the present disclosure, one or more examples of which are illustrated in the accompanying drawings. The detailed description uses numerical and letter designations to refer to features in the drawings. Like or similar designations in the drawings and description may be used to refer to like or similar parts of the present disclosure.

Each example is provided by way of explanation of the invention, not limitation of the invention. In fact, it will be apparent to those skilled in the art that modifications and variations can be made in the present disclosure without departing from the scope thereof. For instance, features illustrated or described as part of one embodiment may be used on another embodiment to yield a still further embodiment. Thus, it is intended that the present disclosure covers such modifications and variations as come within the scope of theappended claims.

As an overview, embodying systems and methods provide an AI (Artificial Intelligence) anomaly pattern recognition model that leverages a diagnostic expert domain knowledgebase and deep learning technique to automatically detect an industrial asset (e.g., wind turbine) operational anomaly and identify root cause(s) corresponding to the detected anomaly. In some embodiments, a large set of training cases can be established based on historical diagnostic records that include multiple root causes. For each training case, several pairs of time series of sensor measurements may be configured and represented as scatter plots, where a combination of data patterns in or derived from the scatter plots indicates a specific root cause of an anomaly reflected in the sensor measurements (i.e., data).

In some embodiments, a convolutional neural network model is developed and used to recognize patterns in images of the scatter plots and to classify the training cases with particular root causes. Further, cross validation is performed to ensure robustness of the generated model. In some embodiments, the model may be used for real-time anomaly prediction of operational assets. Some embodiments might include a feedback loop to, for example, track model accuracy, facilitate the continuous updating of the training data, model improvement, and combinations thereof.

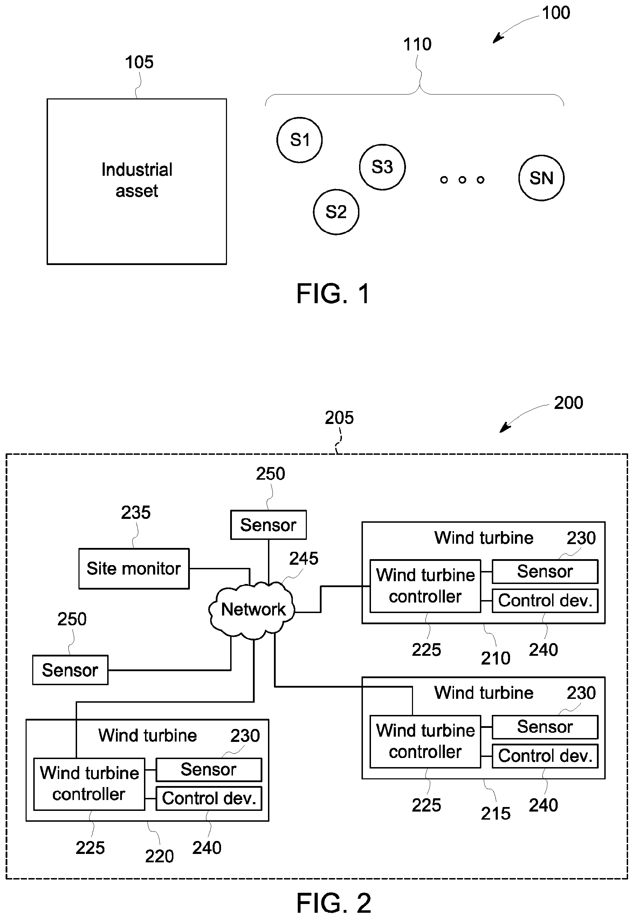

FIG. 1 is a schematic block diagram of an example system 100 that may be associated with some embodiments herein. The system includes an industrial asset 105 that may generally operate normally for substantial periods of time but occasionally experience an anomaly that results in a malfunction or other abnormal operation of the asset. According to some embodiments, a set of sensors 110 S1 through SN may monitor one or more characteristics of the asset 105 (*e.g.,* acceleration, vibration, noise, speed, energy consumed, output power, *etc*.). The information from the sensors may, according to some embodiments described herein, be collected and used to facilitate detection and/or prediction of abnormal operation (i.e., an anomaly) of operating asset 105 and the root cause corresponding to the detected anomaly.

In some aspects, one or more embodiments described herein may be applicable to many different types of industrial assets. By way of example, FIG. 2 is a block diagram of an embodiment of a number (e.g., farm) of wind turbines that may be monitored for use in determining potential anomalies in the operation of the wind turbines comprising system 200. System 200 includes a wind turbine site 205 that includes a plurality of wind turbines 210, 215, and 220 in communication with a monitoring site 235 via a network 245. As an example, network 245 may include, without limitation, the Internet, a local area network (LAN), a wide area network (WAN), a wireless LAN (WLAN), a mesh network, a virtual private network (VPN), and combinations of these and/or other communication network configurations.

In an exemplary embodiment, a wind turbine site 205 includes the plurality of wind turbines 210, 215, and 220 that may each include a processor-enabled wind turbine controller 225. Wind turbine controller 225 of each wind turbine may be coupled in signal communication with site monitor 235 via network 245.

In some embodiments, site monitor 235 might be located at wind turbine site 205 or, alternatively, it might be located remotely from wind turbine site 205. For example, site monitor 235 might be communicatively coupled to and may interact with wind turbine controllers 225 at a plurality (not shown) of wind turbine sites 205.

In some aspects, each of site monitor 235 and wind turbine controller 225 includes a processor (e.g., a computing device or machine). A processor herein may include a processing unit, such as, without limitation, an integrated circuit (IC), an application specific integrated circuit (ASIC), a microcomputer, a programmable logic controller (PLC), and/or any other programmable circuit. A processor herein may include multiple processing units (e.g., in a multi-core configuration). In some embodiments, each of site monitor 235 and wind turbine controllers 225 may be configurable to perform the operations described herein by programming the corresponding processor. For example, a processor may be programmed by encoding an operation as one or more executable instructions and providing the executable instructions to the processor as a data structure stored in a memory device coupled to the processor. A memory device may include, without limitation, one or more random access memory (RAM) devices, one or more storage devices, and/or one or more computer-readable media.

As depicted in the example of FIG. 2, one or more operating condition sensors 230 and 250 are coupled in communication with site monitor 235 and/or wind turbine controllers 225 (e.g., via network 245). Operating condition sensors 230 may be configured to indicate an operating condition, such as a meteorological condition at a corresponding geographic position in the vicinity of one or more of the wind turbines at site 205. For example, operating condition sensors 250 may be configured to indicate a wind speed, a wind direction, a temperature, etc. Operating condition sensor 250 may be positioned apart from wind turbines 210, 215, and 220 to facilitate reducing interference from the wind turbines with the operating condition sensed by operating condition sensor 250.

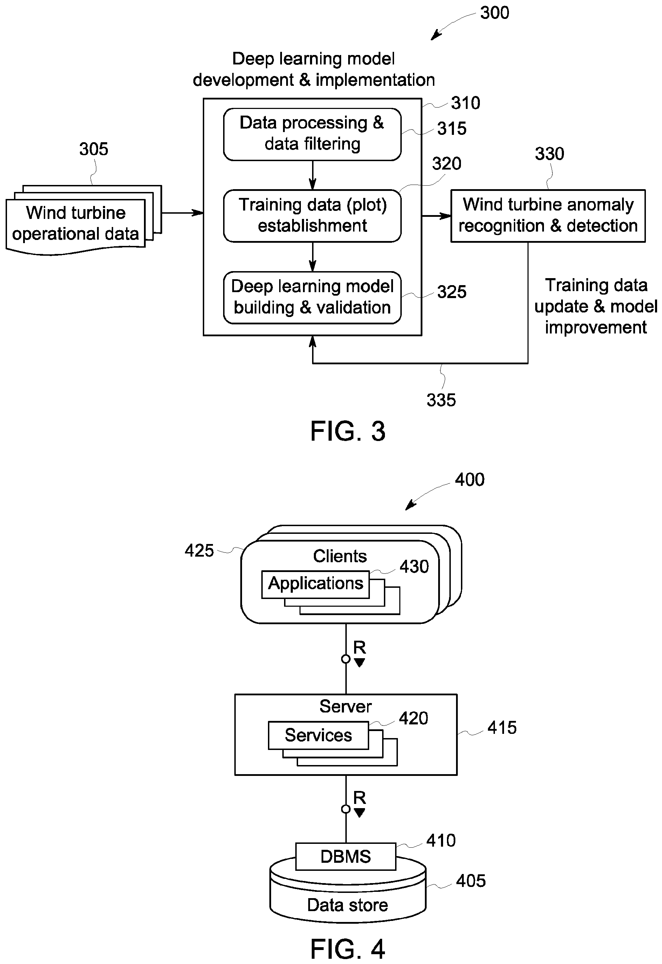

FIG. 3 is a schematic block diagram depicting an overall system 300, in accordance with some embodiments. System 300 illustrates wind turbine operational data 305 being provided as input(s) to a deep learning model development and implementation system, device, service, or apparatus (also referred to herein simply as a "system" or "service") 310 that outputs, at least, data 330 indicative of wind turbine anomalies detected by deep learning model system 310 and the root cause(s) corresponding to the detected anomalies.

In the example of FIG. 3, deep learning model system 310 includes a data processing & data filtering component 315, a training data establishment component 320, and a deep learning model building and validation component 325. Functionality corresponding to each of these components (described below) might be embodied in separate systems, subsystems, services, and devices. Alternatively, one or more of the different functionalities might be provided by a same system, subsystem, device, and service (i.e., a cloud-based service supported by a backend system including processing and database resources).

In some embodiments, data processing & data filtering component 315 might process, condition, pre-process, or "clean" the operational data 305 so that it is configured in an expected manner and format for efficient processing by deep learning model system 310. In some scenarios, operational data 305 might include historical operational data associated with one or more wind turbines. Operational data 305 might be received directly or indirectly from the wind turbines, such as a database storing the data and/or a service provider that might aggregate or otherwise collect the operational data. For example, data processing & data filtering component 315 might operate to exclude turbine downtime data received in operational data 305 since such data may not be needed in some embodiments herein. In some aspects, data processing may be performed to ensure data quality and data validity, such as, for example, to process the operational data to execute an air density correction for wind speed measurements included in the operational data 305.

The training data establishment component 320 or functionality of deep learning model system 310 may operate to establish a set of training cases based on the historical diagnostic records of the wind turbine operational data 305 that includes multiple root causes embedded within the data. The set of training cases may be used in training the deep learning model generated by component 325. In some embodiments, multiple pairs of time series of sensor measurements are selected for each training case and configured as scatter plots (or other graphical representations of data), wherein a combination of data patterns in the scatter plots is specific to one root cause. It is noted that normal turbine operation cases are also included in the training data set, and might be used to, for example, provide a relative operational baseline for the wind turbines represented in the operational data 305. In some embodiments, the diagnostic data records 305 and the corresponding scatter plots may be reviewed by domain experts and/or automated processing systems that can, for example, reference digitized or other machine readable data structures and systems, devices, and services that embody a domain expert knowledgebase to ensure correct labeling of training cases.

The deep learning model building and validation component 325 or functionality of deep learning model system 310 may operate to convert or transform the scatter plots (or other representations of wind turbine operational data 305) into visual representation images of the scatter plots (or other representations of the operational data). For example, deep learning model building and validation component 325 may operate to develop (i.e., generate) a deep learning classification model that builds connections (e.g., transfer functions, algorithms, etc.) between the scatter plots based on the operational data and root causes for anomalies in the operational data by processing an input of high-dimensional images including data pixels corresponding to the scatter plots to generate an output including root cause labels associated with one or more anomalies derived from data patterns in the images. The deep learning model herein is a deep learning classification model developed to build a connection between scatter plots including data representations of wind turbine anomalies and the corresponding root causes thereof. In some aspects, a convolutional neural network (CNN) model is developed to capture and process pixel data to recognize the complex data patterns in images of the scatter plots and to further classify anomaly cases in the training set as being associated with a particular root cause for the determined anomaly classification. Deep learning model building and validation component 325 may include functionality to perform one or more types of cross validation on the developed and trained model to ensure robustness of the model.

The output of deep learning model system 310 including an indication of the detected one or more anomalies derived from data patterns in the images and the corresponding root cause labels associated therewith, or at least a portion thereof, might be used for updating training data and model improvement. For example, when the model is used for real-time anomaly detection and root cause identification (i.e., the wind turbine operational data 305 is real-time operational data from one or more wind turbines), a feedback loop 335 may be configured to track an accuracy of the model. For example, newly identified anomaly cases can be added into the original training set (e.g., a subset of the historical operational data used to develop the model), and an updated deep learning model can be re-tuned to capture the new expanded distribution of training cases. In this manner, a functionality or process can be provided that facilitates a continuous updating of training data for the model, as well as model improvement.

FIG. 4 illustrates a system architecture of a system 400 in accordance with an example embodiment. It should be appreciated that the embodiments herein are not limited to architecture 400 and FIG. 4 is shown for purposes of example. The deep learning anomaly detection and correlated root cause classification system disclosed herein may be implemented by system 400. For example, the database may include or interact with software that performs deep learning image processing for anomaly detection and correlated root cause classification of the example embodiments.

Referring to FIG. 4, architecture 400 includes a data store 405, a database management system (DBMS) 410, a cloud server 415, services 420, clients 425, and applications 430. Generally, services 420 executing within cloud server 415 receive requests from applications 430 executing on clients 425 and provides results to the applications 430 based on data stored within data store 405. For example, cloud server 415 may execute and provide services 420 to applications 430.

In one non-limiting example, a client 425 may execute one or more of the applications 430 to invoke performance of an anomaly detection and root cause identification process via a user interface displayed on the client 425 to view analytical information such as visualizations (e.g., charts, graphs, tables, and the like), based on the underlying data (e.g., wind turbine operational data) stored in the data store 405. The applications 430 may pass analytic information to one of services 420 (e.g., a deep learning model development and implementation service such as, for example, system 310 in FIG. 3) based on input received via the client 425.

According to various embodiments, one or more of the applications 430 and the cloud services 420 may be configured to perform anomaly detection and root cause identification based on image processing performed by a deep learning model developed in accordance with some embodiments herein.

In some embodiments, the data of data store 405 may include files having one or more of conventional tabular data, row-based data, column-based data, object-based data, and the like. According to various aspects, the files may be database tables storing data sets. Moreover, the data may be indexed and/or selectively replicated in an index to allow fast searching and retrieval thereof. Data store 405 may support multi-tenancy to separately support multiple unrelated clients by providing multiple logical database systems which are programmatically isolated from one another. Furthermore, data store 405 may support multiple users that are associated with the same client and that share access to common database files stored in the data store 405.

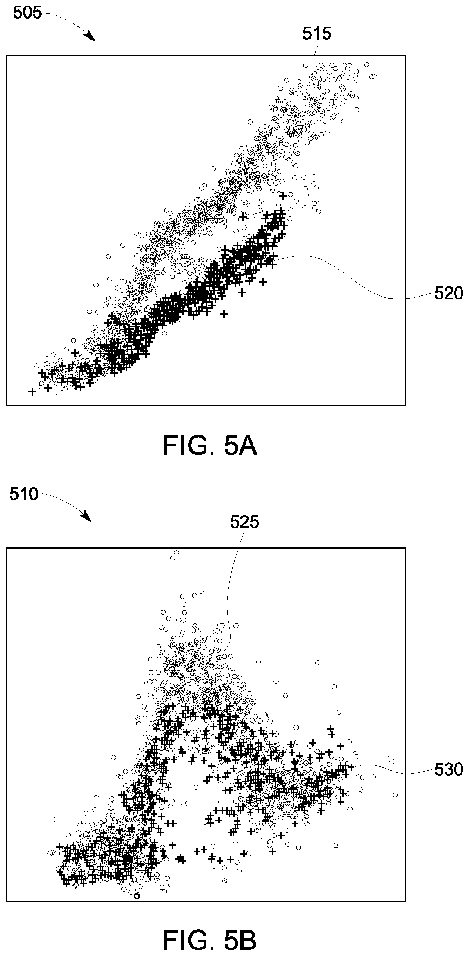

FIGS. 5A and 5B are illustrative scatter plots of sensor data for a wind turbine, in accordance with some embodiments herein. In these examples, scatter plots reflect operational data of tower acceleration (y-axis) and wind speed (x-axis), in which the high tower acceleration measurements are due to different root causes. As such, each scatter plot captures a specific pair of time series data derived from the sensor measurements for a wind turbine (or other asset). In FIG. 5A, the high tower acceleration measurements are due to wind turbine blade misalignment and in FIG. 5B the high tower acceleration measurements captured in the scatter plot are due to an incorrect setting of a specific control parameter for the wind turbine.

Referring to the scatter plots FIGS. 5A and 5B. (as well as other scatter plots herein), the data points depicted at 515 and 525 correlate to the anomalous data points included in the sensor measurements for the wind turbine (or other asset) that are each a target (i.e., anomaly) for which the system is trying to find a root cause for. The data points of the scatter plots depicted at 520 and 530 correlate to a normal wind turbine behavior, within an expected range under the operating conditions at the time the measurements were recorded. Scatter plots 520 and 530 may be added to the scatter plots including the pairwise data of plots 515 and 525 as a relative (i.e., comparative) baseline to facilitate determining the anomalous data points therein. For example, FIG. 5A is an illustrative scatter plot where data points 520 represent a normal energy production and data points 515 indicate the wind turbine is under performing.

In some aspects, there might generally be a large variation in wind turbine operation data due to a plurality or combination of sensor, turbine control, and environment factors. The combination and complexity of factors presents a challenge to accurately distinguishing between normal wind turbine operation and abnormal wind turbine operation. In some aspects, the present disclosure's deep learning model to recognize data patterns embedded in images of the scatter plots of sensor measurements provides improvements by, for example, increasing and enhancing the anomaly detection accuracy and root cause identification.

In some embodiments and aspects, automatic processes and systems implementing such processes as disclosed herein to detect wind turbine (or other assets) operation anomalies and identify the corresponding root causes that can be scaled to multiple turbines at a wind farm and/or fleet level include a "physical + digital" integration that leverages accumulated domain knowledge (i.e., wind turbine operating characteristics, anomalies, and root causes of those anomalies) and advanced analytical techniques such as, for example a deep neural network (e.g., a CNN).

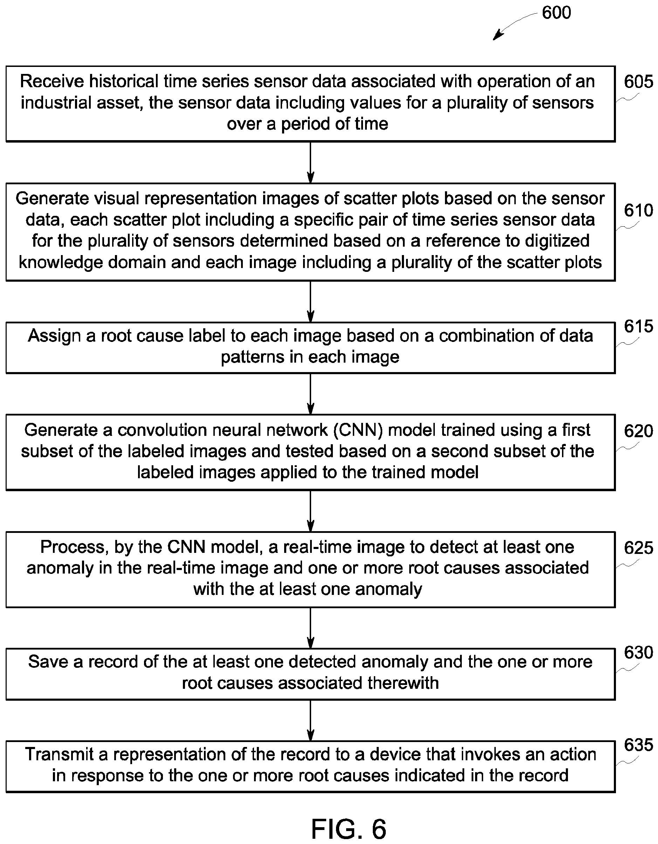

FIG. 6 is a flow diagram of an illustrative process 600, in accordance with some embodiments. The flow diagrams and processes described herein do not imply a fixed order to the steps, and embodiments of the present invention may be practiced in any order that is practicable. Note that any of the methods described herein may be performed by hardware, software, or any combination of these approaches. For example, a non-transitory computer-readable storage medium may store thereon instructions that when executed by a machine result in performance according to any of the embodiments described herein.

At operation 605, a deep learning model development platform, system, service, or device may receive historical time series sensor data associated with operation of an industrial asset, where the sensor data includes values for a plurality of sensors over a period of time. In some embodiments, a time series data collection component may collect and store wind turbine operational time series data including a set (e.g., pairs) of sensor measurements.

In some instances, at least a portion of the raw historical time series sensor data may be filtered to exclude data and/or artifacts that will not be included or needed in further operations of process 600. Such filtered data may include wind turbine (or other asset) downtime measurements.

At operation 610, visual representation images of scatter plots based on the received historical time series sensor data may be generated, wherein each scatter plot includes a specific pair of time series sensor data for the plurality of sensors interfaced with the wind turbine. In some embodiments, one or more of the generated images may comprise a plurality of the scatter plots.

In some embodiments, at least a portion of the received historical time series sensor data may be transformed to a format, configuration, level, resolution, etc. from its raw configuration as obtained by the wind turbine (or other asset) sensors. In some instances, the transformation will depend on the sensor measurements to be processed (e.g., an air density correction for wind speed measurements, etc.).

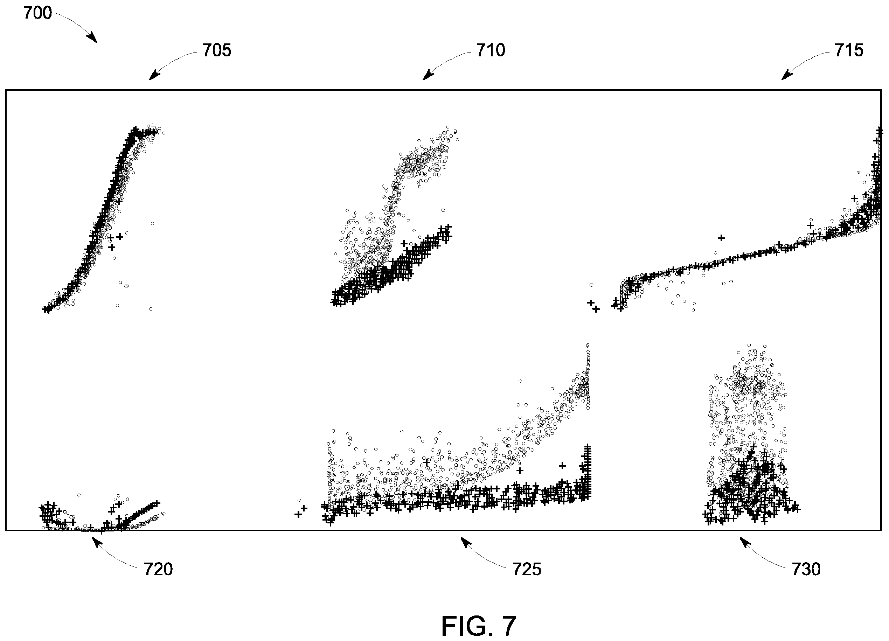

In some embodiments, a sub-process of process 600 or separate process might include aspects of an image specification and within-image plot arrangement method. Such a method may include, in part and/or in combination, selecting a specific set of pairs of sensor measurements according to known diagnostics (e.g., a digitized or machine-readable knowledgebase built on engineering experience) for inclusion in an image; designing an image layout, including specifying a size for the image; and assigning each pair of sensor measurements to a specific location in the image. In this manner, an image comprising visual representations for a plurality of scatter plots might be configured in a single image in an efficient and defined manner so that such constructed images may be reliably generated based on scatter plots of operational data and further accurately analyzed for the detection of patterns indicative of operational anomalies. The pairwise sensor scatter plots and image generation therefrom may include, in part and/or in combination, drawing a scatter plot for each pair of time series sensor measurements; using, for each scatter plot, a binary scale for each pixel value, or using a continuous scale that incorporates additional information (e.g., data density and/or other normalized sensor measurements) in the scatter plot; adjusting the vertical and horizontal axis scale across scatter plots in the image to, for example, present/magnify certain image features; and adding, to each scatter plot, a comparative scatter plot as a reference/baseline plot, thereby generating a multi-layer image. FIG. 7 is an example of an image 700 including visual representations of six scatter plots (i.e., 705, 710, 715, 720, 725, and 730).

At operation 615, a root cause label is assigned to each visual image including the scatter plots representing an operational anomaly based on a reference to and leveraging of, at least in part, a digitized knowledge domain data structure or system associated with the industrial asset(s) in combination with the data patterns in each image. In some aspects, a standardized ground truth label is assigned to each generated image. In some regards, abnormal sensor measurements (i.e., anomalies) may be caused by different root causes. In particular, each root cause requires a specific type of maintenance and repair practice. As such, identification of the correct root cause can provide actionable insights with respect to on-going operations, preventative maintenance, and corrective maintenance aspects of a wind turbine (and/or other assets).

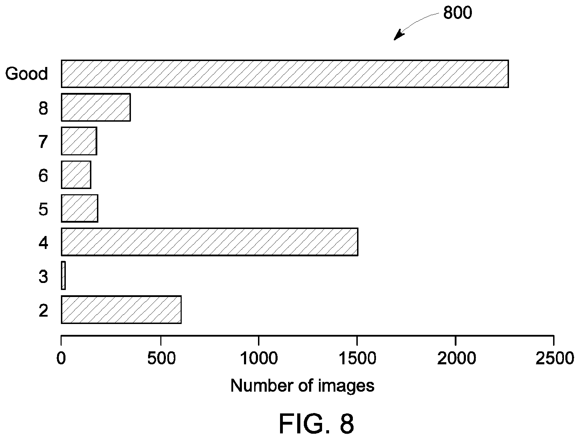

FIG. 8 is an illustrative example representation of data associated with labelling images in accordance with some embodiments. Graph 800 is an example visualization of ground truth data related to about 60 wind farms including about 1200 turbines. Sufficient data was collected to generate a total of about 5200 images, where about 2500 anomaly cases were observed.

Continuing to operation 620, a deep learning model and more particularly a convolutional neural network (CNN) model is trained using a first subset of the labeled images and tested based on a second subset of the labeled images applied to the trained model to evaluate the performance of the trained model. In some aspects, the first subset of the labeled images is referred to a training set of data and the second subset of the labeled images that is applied to the trained model is referred to as test data, where the first and second subsets of images are distinct from each other.

In some embodiments, the CNN adheres to a specific model structure defined by, for example, the number of layers in the neural network, the number of nodes for each layer, the inter-connection between layers, transfer functions between layers, etc. and is trained using the training data with model parameters estimated accordingly. In some instances, cross validation technique(s) may be used to avoid model overfitting on the training data.

Moreover, iterations of the model training/test cycles may be executed to identify an optimal and robust CNN, where an "optimal" model may vary depending on one or more features of an application.

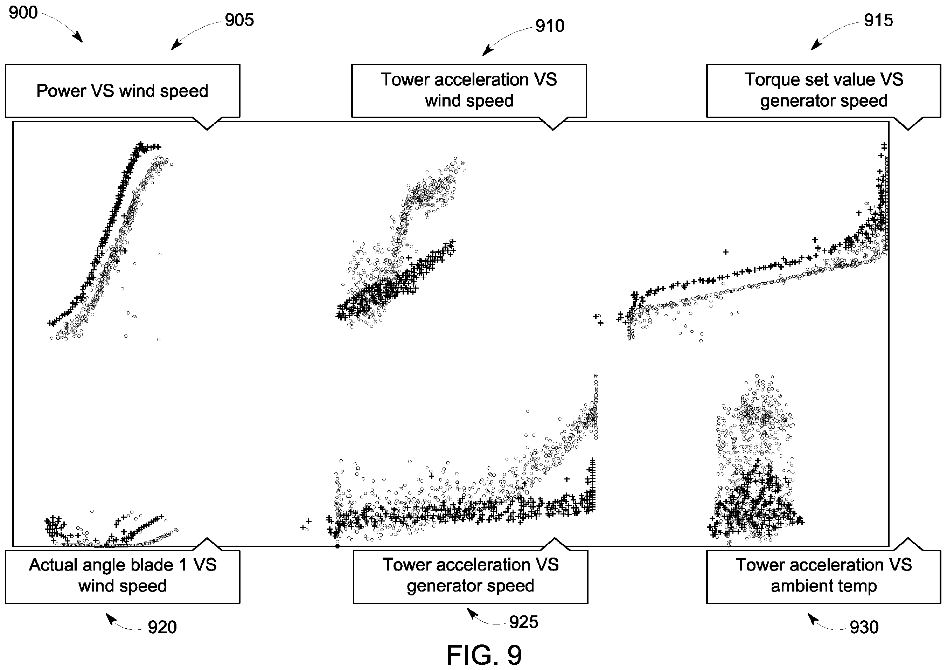

FIG. 9 is an illustrative example of some aspects associated with generating labeled images in accordance with some embodiments. Image 900 includes six(6) different plots, 905, 910, 915, 920, 925, and 930, where each includes a description of its paired scatter plot. In some regards, a modularized image generation process as disclosed herein by way of example facilitates, adding and modifying image layouts (e.g., add more subplots, quickly test new plot layouts, etc.); changing a data processing process for different analyzing tasks; and expanding/accommodating new types of data representations other than scatter plots.

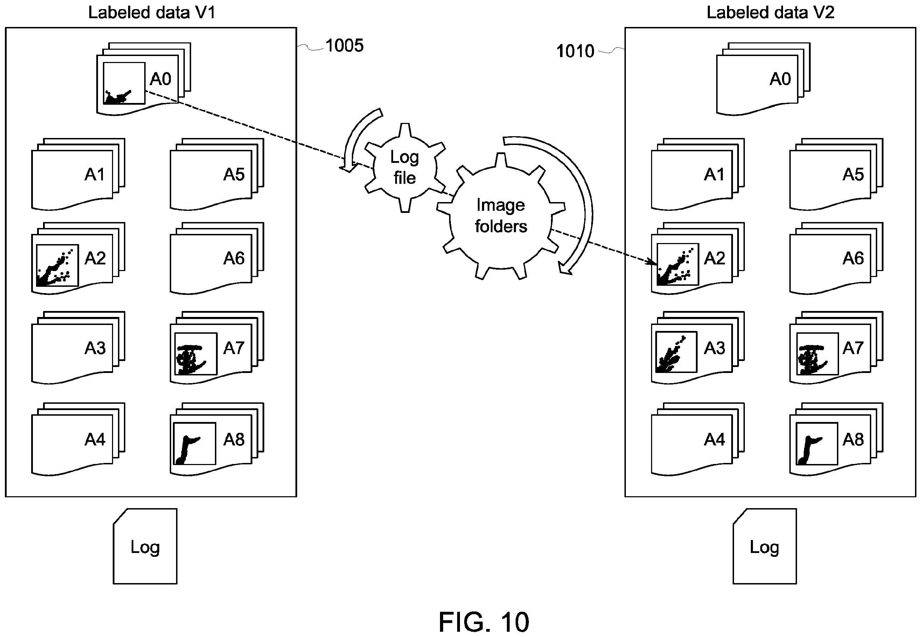

FIG. 10 is an illustrative example of some aspects associated with generating a deep learning model in accordance with some embodiments. Illustrated in FIG. 10 are some aspects of an anomaly label correction and synchronization process wherein anomaly data files (e.g., log files) stored in a first data store 1005 are synchronized and accurately correlated with labeled data files (e.g., image files) stored in a second data store 1010 storing labeled image files in image folders. Synchronization between the labeled files persisted in the two different data volumes may be performed as changes occur or periodically (e.g., weekly, nightly, etc.) to ensure an accurate correlation between the different representations of operational data are maintained.

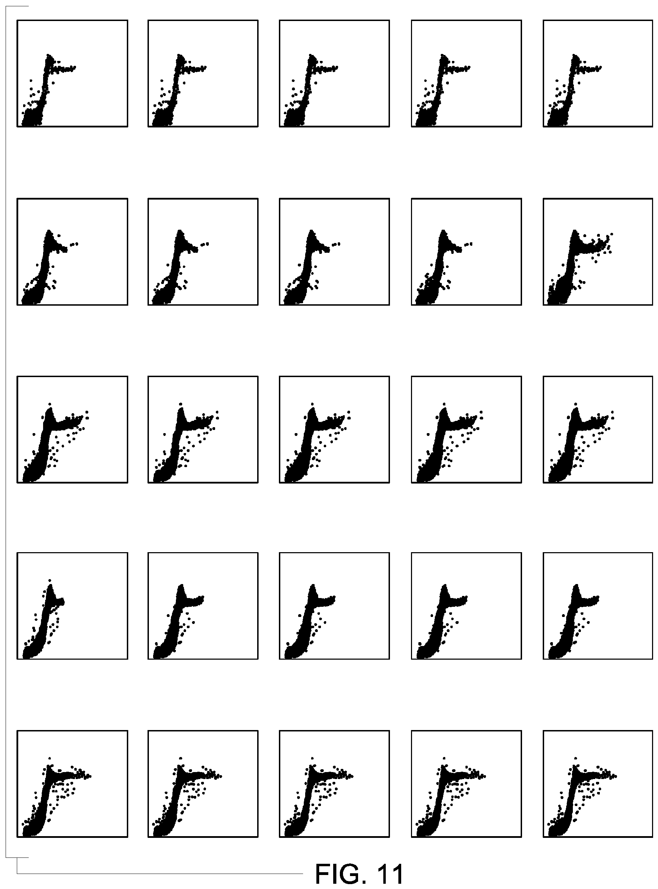

FIG. 11 is an illustrative example of some aspects associated with anomaly image generation in accordance with some embodiments In some aspects, FIG. 11 illustrates multiple images generated from the same wind turbine. In one example, where a wind turbine has an anomaly corresponding to a specific root cause that has existed for 100 days, each 5 days of the data may be used to generate one image. In this manner, a total of 20 images might be generated from this turbine. In some instances, generating multiple images for a particular wind turbine (or other asset) might be performed to increase the training data size (i.e., the number of training images) to ensure a robust deep learning model development.

At operation 625 of FIG. 6, the CNN model initially developed at operation 620 is used to process a real-time image associated with a wind turbine to detect at least one anomaly in the real-time image and to identify the one or more root causes associated with the at least one anomaly. In some aspects, the real-time image includes visual representations of real-time time series sensor data for an industrial asset relating to the historical time series sensor data.

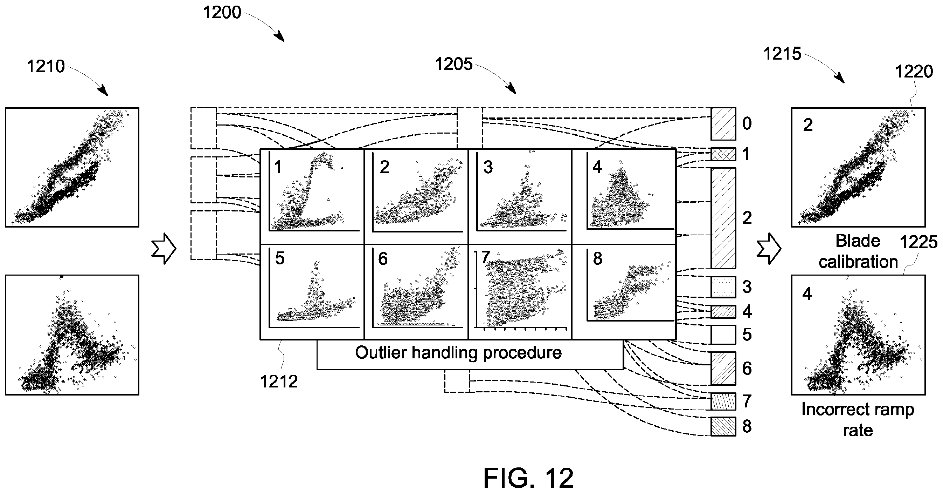

FIG. 12 is a block diagram illustrating an anomaly detection and root cause identification system 1200 using a deep learning model, in accordance with some embodiments herein. As shown, a machine learning engine 1205 executing a deep learning anomaly detection and root cause identification model in accordance with some aspects herein receives operational data 1210 comprising scatter plots that include data indicative of anomalies. The scatter plots are transformed and processed as detailed herein to generate an image 1212 including a plurality of visual representations of scatter plots in a specific layout, size, and configuration. The machine learning engine processes the combination of images to recognize patterns therein that correspond to one of a plurality of defined anomalies (e.g., 8 anomalies in the example of FIG. 12). The output 1215 of the machine learning engine includes an indication of the specific root cause (e.g., anomaly 2 = blade calibration and anomaly 4 = incorrect ramp rate) in response to the specific inputs 1210

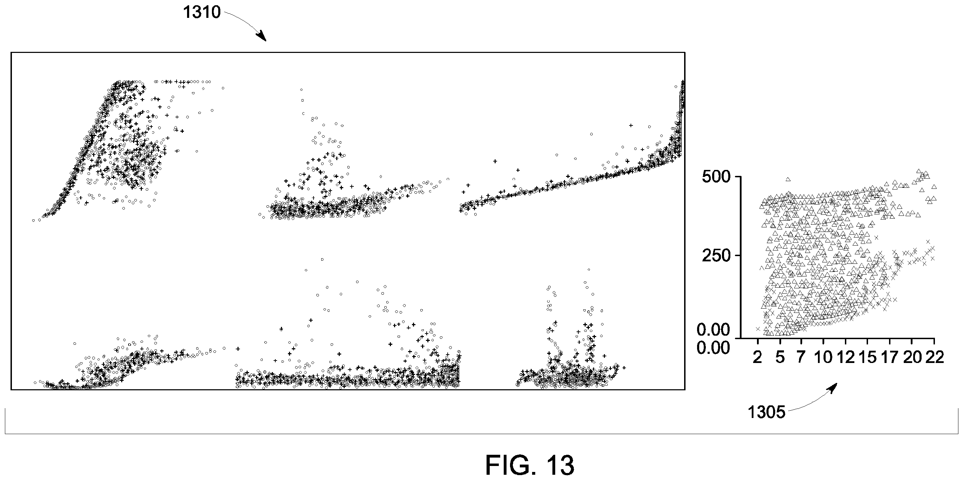

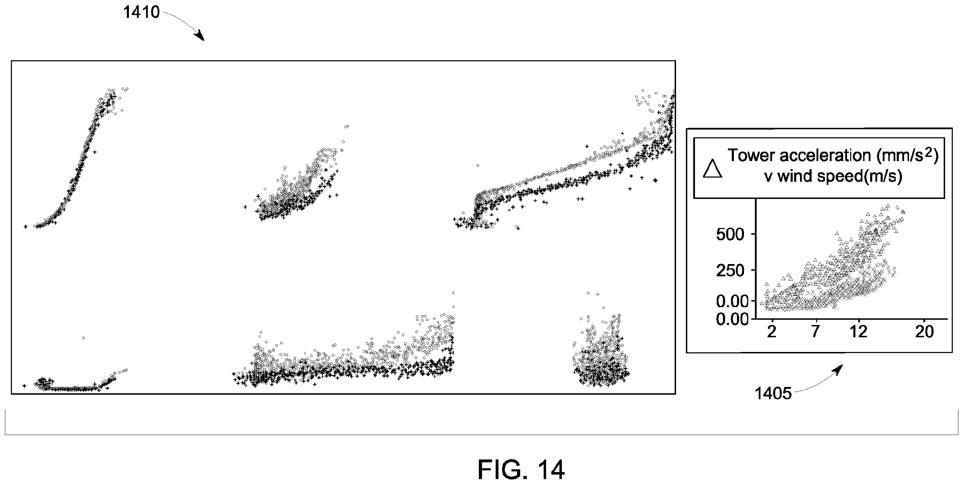

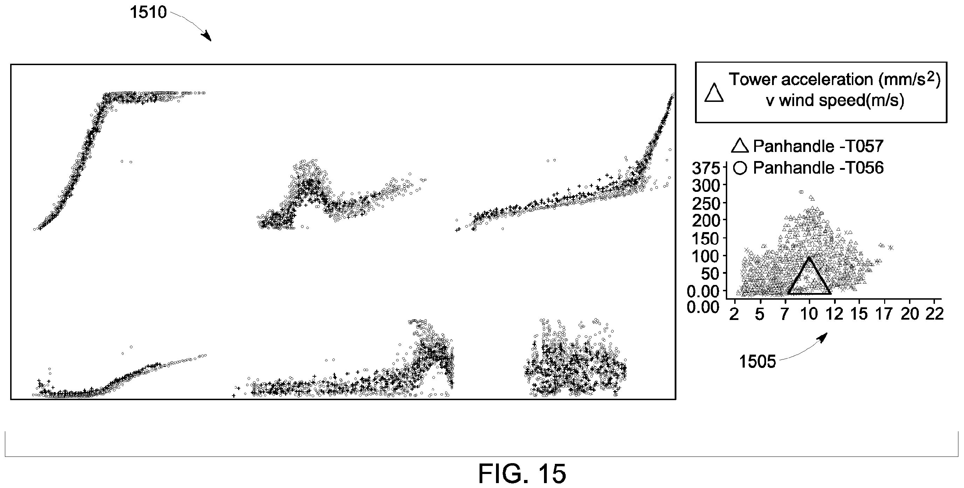

FIGS. 13 - 15 are illustrative examples of an anomaly detection and root cause identification by a deep learning model in accordance with some embodiments. As an example, FIG. 13 illustrates the detection of an anomaly in plot 1305 as represented in image 1310 and processed by a deep learning model herein, where the corresponding root cause of the anomaly is identified as being a temperature affected PCH box. FIG. 14 illustrates the detection of an anomaly in plot 1405 as represented in image 1410 and processed by the deep learning model herein, where the corresponding root cause of the anomaly is identified as being due to a blade misalignment and FIG. 15 illustrates the detection of an anomaly based on plot 1505 and image 1510 where the root cause of the anomaly is identified as being due to a ramp rate parameters issue.

Referring to FIG. 6, and in particular, operation 630, a record of the at least one detected anomaly and the one or more root causes associated therewith may be saved and persisted, for example, in a computer or machine accessible memory or data store. In some instances, the record may be persisted in a memory or data store associated with a database and/or database management system.

At operation 635, a representation of the record including the at least one detected anomaly and the one or more root causes associated therewith may be sent to or transmitted to a device (e.g., a client device) that invokes an action (e.g., generate alarm(s) when a specific root cause is identified) in response to the one or more root causes indicated in the record. In some instances, the action might be automatically (i.e., without further user action(s)) invoked, executed, or at least initiated by the receiving device in response to the reception of the representation of the record.

In some embodiments, process 600 or a process executed to compliment process 600 might include providing at least a portion of the record of the at least one detected anomaly and the one or more root causes associated therewith back to the model to assist in at least one of tracking an accuracy of the model, continuous updating of the first set of the labeled images to train the model, re-tuning the model, and combinations thereof.

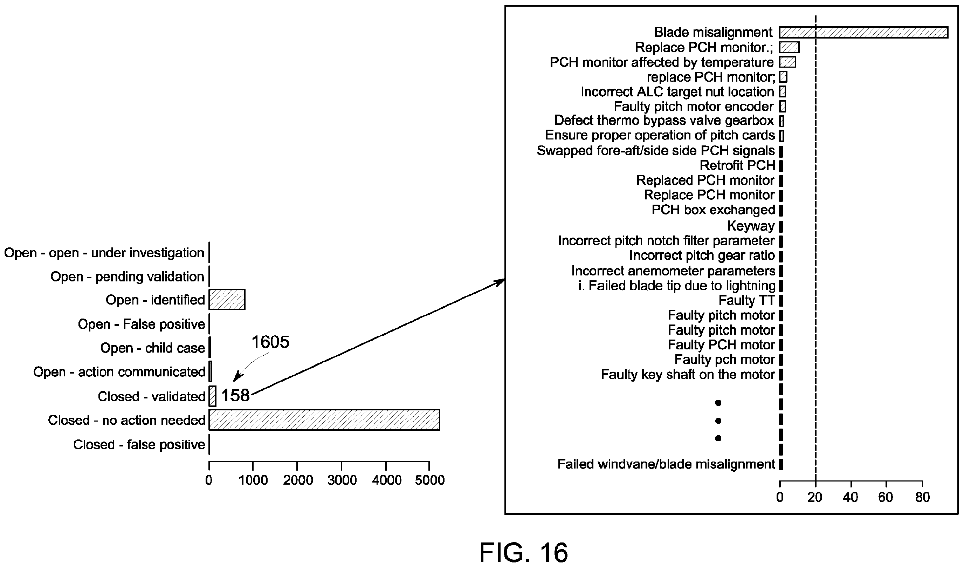

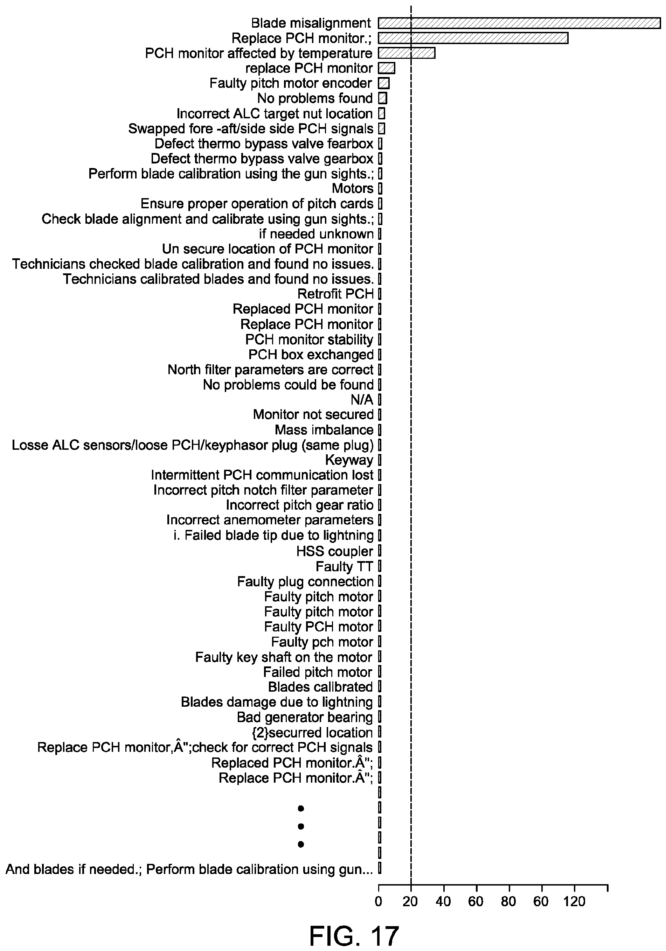

In some aspects, labelling of training data for a deep learning model herein is a significant concern. Consistency, accuracy, and sufficiency of training data are key aspects to ensure training data that is reliable to establish an accurate model. As used herein, consistency refers to using the same labeling nomenclature to describe a particular feature, event, or entity. For example, a first measurement "X" should always be referenced as measurement "X", not "X" in one instance and "Y" in other instances. Accuracy in the data refers to a preciseness in the labelling of the data such that each label clearly references one particular feature, event, or entity. FIG. 16 demonstrates a selection of only validated historical diagnostic records to be included in the training data (e.g., only 158 records are selected as shown at 1605). Other historical records that have not been validated may provide inaccurate diagnostic labels, and have not been select for the deep learning model development. FIG. 17 illustrates examples of unstructured text/notes that might even be associated with the validated historical diagnostic records. In this scenario, appropriate text mining may be performed to clean the notes/texts to establish consistent and accurate labels for the historical diagnostic records.

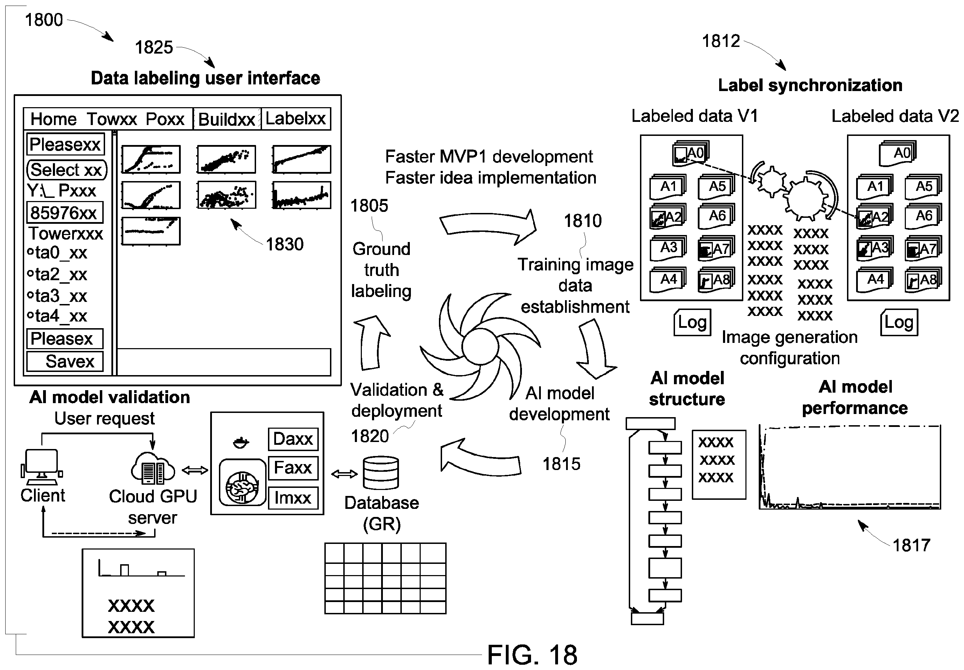

FIG. 18 relates to some aspects of a continuous improvement cycle process 1800, in accordance with some embodiments. FIG. 18 includes a ground truth labeling phase 1805 that uses operational data that can be viewed, specified, and manipulated via user interface (UI) 1825. UI 1825 may present displays of data scatter plots as seen at 1830 in the UI to facilitate the labelling of anomalies. Training data based on historical operational data may be configured at training image data establishment phase 1810. In some aspects, accurate and synchronized files regarding representations of the scatter plots and the images constructed therefrom are processed at 1812. The deep learning model to detect anomalies in data patterns in the constructed images and the identification of the corresponding root cause(s) is performed at phase 1815, as disclosed hereinabove. Analytics regarding the structure of the model and performance metrics thereof are shown at 1817 and may be leveraged to make, for example, tuning decisions regarding an optimal and/or robust model selection. The generated model is further validated and subsequently deployed for service at phase 1820. As part of a process to continuously improve the accuracy, reliability, and robustness of the generated deep learning model, outputs, or at least a portion thereof, may be fed back into the system 1800 to supplement the existing training data and retuning of the model. In some example scenarios, one or more new models might be generated over time as features and other characteristics are learned by the system.

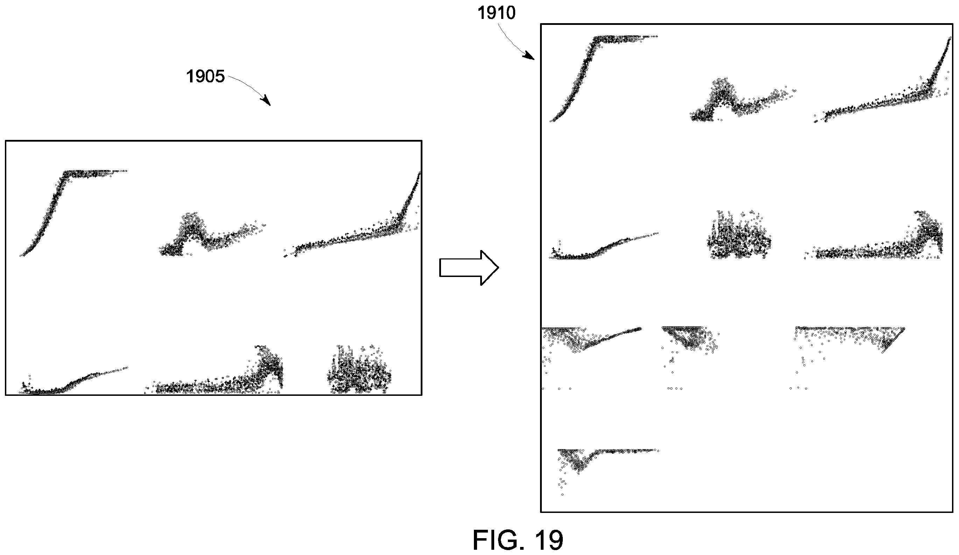

In some embodiments, FIG. 19 illustrates model improvement based on the retraining of an existing model using a new image and updated ground truth data. In FIG. 19, image 1905 is an earlier image used to, for example, initially train a model and image 1910 is a new image that can be used to retrain the model to enhance a performance thereof. In the example of FIG. 19, image 1905 includes 6 scatter plots configured in a 2-by-3 layout. Four additional pairs of time series operational data are used to generate the four additional scatter plots in image 1910 that includes a total of 10 scatter plots arranged in a 4-by-3 layout, where the two(2) lower-right grids do not include any data and are therefore blank.

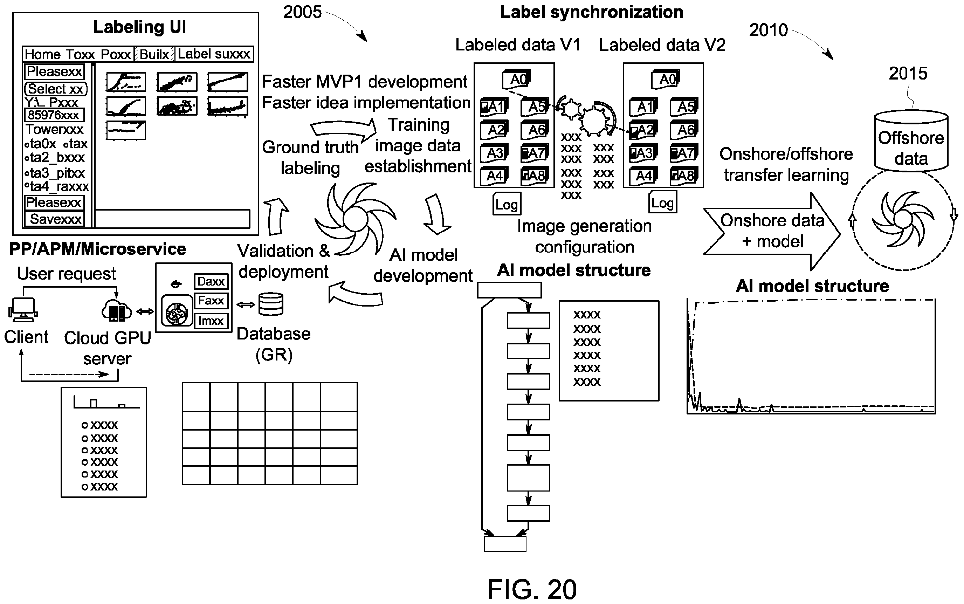

It is noted that the various features, systems, and processes disclosed herein are not limited to the specific example applications and embodiments explicitly discussed. For example, the present disclosure is not limited to the specific examples discussed in the context and application of wind turbines disclosed in the detailed discussion above and/or the accompanying drawings. FIG. 20 illustrates concepts and features of an anomaly detection system in accordance with the present disclosure such as, for example, a land-based wind farm system 2005 that may be extended to and applied to an offshore wind farm site 2010. In some regards, offshore data 2015 may be used to at least supplement existing training data of the deep learning model trained on the land-based system to capture operational differences and/or idiosyncrasies of the offshore wind farm site 2010.

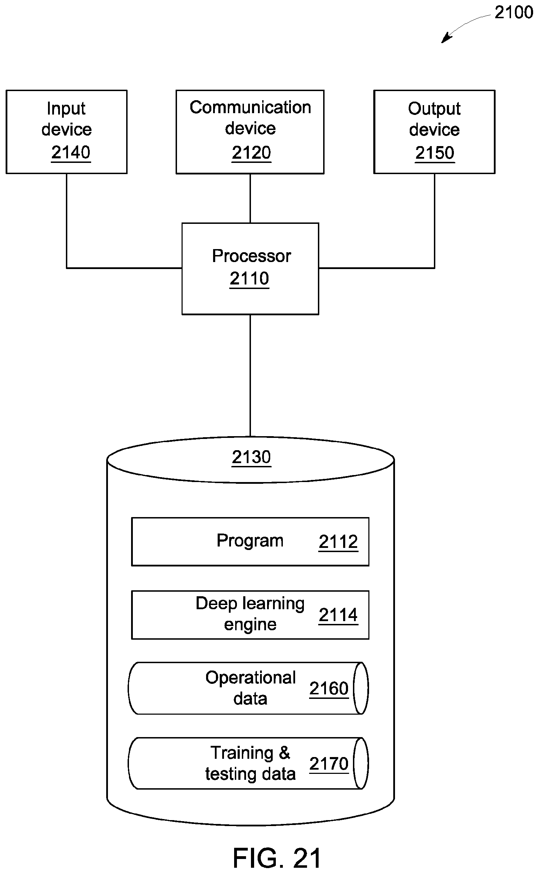

The embodiments described herein may be implemented using any number of different hardware configurations. For example, FIG. 21 illustrates an apparatus 2100 that may be, for example, associated with the systems and architectures depicted in FIGS. 1 - 5 and process 600 of FIG. 6. Apparatus 2100 comprises a processor 2110, such as one or more commercially available Central Processing Units (CPUs) in the form of one-chip microprocessors, coupled to a communication device 2120 configured to communicate via a communication network (not shown in FIG. 21). Apparatus 2100 further includes an input device 2140 (e.g., a mouse and/or keyboard to enter information about industrial asset operation and anomalies) and an output device 2150 (e.g., a computer monitor to output warning and reports).

Processor 2110 also communicates with a storage device 2130. Storage device 2130 may comprise any appropriate information storage device, including combinations of magnetic storage devices (*e.g.,* a hard disk drive), optical storage devices, mobile telephones, and/or semiconductor memory devices. The storage device 2130 stores a program 2112 and/or a deep learning engine 2114 (*e.g.,* associated with a model development and tuning process) for controlling the processor 2110. The processor 2110 performs instructions of the programs 2112, 2114, and thereby operates in accordance with any of the embodiments described herein. For example, the processor 2110 might receive sensor data associated with operation of an industrial asset, the sensor data including values for a plurality of sensors over a period of time. The processor 2110 may transform scatter plot representations of the operational data to image data comprising a plurality and combination of visual representations of the scatter plots capturing anomaly patterns for an industrial asset for which a model is developed based on training data and tested/evaluated by test data of the images. An output of the model may include an indication of the anomaly and the corresponding root cause for the anomaly. The generated deep learning (classification) model may then be executed to automatically identify an anomaly and its corresponding root cause for an operating industrial asset.

The programs 2112, 2114 may be stored in a compressed, uncompiled and/or encrypted format. The programs 2112, 2114 may furthermore include other program elements, such as an operating system, a database management system, and/or device drivers used by the processor 2110 to interface with peripheral devices.

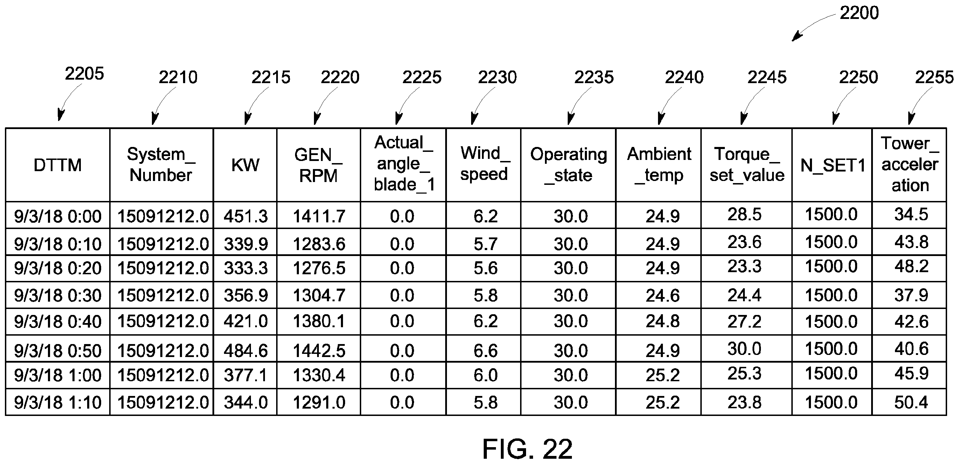

As shown in FIG. 21, storage device 2130 also stores operational data 2160 and training and testing data 2170 associated with wind turbines. One example of a database 2200 that may be used in connection with the detection and root cause identification apparatus 2100 will now be described in detail with respect to FIG. 22. The illustration and accompanying descriptions of the database presented herein is exemplary, and any number of other database arrangements could be employed besides those suggested by the figures.

FIG. 22 is a tabular view of a portion of a database 2200 in accordance with some embodiments of the present invention. The table includes entries associated with operationof a wind turbine. The table also defines fields 2205, 2210, 2215, 2220, 2225, 2230, 2235, 2240, 2245, 2250, and 2255 for each of the entries. The fields specify: a date 2205, a systemidentifier number 2210, a power of the turbine 2015, a generator RPM 2220, blade angle 2225, wind speed 2230, operating state 2235, ambient temperature 2240, torque set value 2245, generator RPM set value 2250, and a tower acceleration value 2255. The information in the database 2100 may be periodically created and updated based on information collectionduring operation of wind turbines.

Some embodiments herein provide an automatic approach to detect turbine operation anomaly and identify the corresponding root causes, and therefore avoid tedious manual diagnostic process(es). The deep learning model herein can be applied to the real-time turbine operational data for all the turbines at the farm and/or fleet level, which facilitates the asset performance management strategy and largely increases business productivity. Also, the ability to identify root causes enables more efficient maintenance planning and solution deployment at the wind farm.

An embodying deep learning model can automatically detect anomaly and identify root causes with high model accuracy.

An embodying deep learning model might detect, for example, tower acceleration anomaly and identify the corresponding root causes based on thousands of historical diagnostic cases. Applicant(s) have realized a prove-of-concept model tested on real-time turbine operational data from six wind farms with wind turbines, and root causes of tower acceleration anomaly have been successfully identified.

While only certain features of the invention have been illustrated and described herein, many modifications and changes will occur to those skilled in the art. It is, therefore,to be understood that the appended claims are intended to cover such modifications and changes.

## Claims

1. A computer-implemented method associated with anomaly detection and root cause identification of an industrial asset (105), the method comprising:
receiving historical time series sensor data associated with operation of an industrial asset (105), the sensor data including values for a plurality of sensors (230; 250) over a period of time;
generating visual representation images of scatter plots (520; 530) based on the historical time series sensor data, each scatter plot (520; 530) including a specific pair of time series sensor data for the plurality of sensors (230; 250) determined;
assigning a root cause label to each image based on a reference to a digitized knowledge domain associated with the industrial asset (105) and in combination with data patterns in each image;
generating a convolutional neural network, CNN, model trained using a first subset of the labeled images and tested based on a second subset of the labeled images applied to the trained model, the first and second sets of images being distinct from each other;
process, by the CNN model, a real-time image to detect at least one anomaly in the real-time image and one or more root causes associated with the at least one anomaly, the real-time image including visual representations of real-time time series sensor data for an industrial asset (105) relating to the historical time series sensor data;
saving a record of the at least one detected anomaly and the one or more root causes associated therewith; and
transmitting a representation of the record to a device that invokes an action in response to the one or more root causes indicated in the record.

2. The method of claim 1, wherein the industrial asset (105) is at least one wind turbine system.

3. The method of claims 1-2, wherein the generating of the images of the scatter plots (520; 530)comprises one or more of the following:
specifying a layout and size for each image;
assigning each scatter plot (520; 530) to a particular layout location in each image;
representing data in the scatter plots (520; 530) as pixel values based on at least one of a binary scale and a continuous scale; and
scaling at least one axis of the scatter plots (520; 530) to adjust a magnification of the visual representation thereof in the images.

4. The method of any of the preceding claims, further comprising adding, as a reference baseline, a comparative scatter plot to each scatter plot (520; 530), wherein the generated image includes a multi-layer image.

5. The method of any of the preceding claims, wherein the CNN model is defined by a combination of specified characteristics, the characteristics including a number of layers for the model, number of nodes for each layer for the model, inter-connections between the layers for the model, and transfer functions between the layers for the model.

6. The method of any of the preceding claims, further comprising cross-validating the model based on a third set of the labeled images.

7. The method of any of the preceding claims, further comprising providing at least a portion of the record of the at least one detected anomaly and the one or more root causes associated therewith back to the model to assist in at least one of tracking an accuracy of the model, continuous updating of the first set of the labeled images to train the model, re-tuning themodel, and combinations thereof.

8. The method of any of the preceding claims, wherein the model recognizes data patterns in each image indicative of at least one anomaly and classifies the at least one anomaly with the one or more root causes associated with the recognized at least one anomaly.

9. The method of claim 8, wherein the model recognizes data patterns based on a plurality of the scatter plots (520; 530) included in each of the images.

10. A system (400; 2100) comprising:
a memory storing processor-executable program code; and
a processor (2110) to execute the processor-executable program code in order to cause the system to:
receive historical time series sensor data associated with operation of an industrial asset (105), the sensor data including values for a plurality of sensors (230; 250) over a period of time;
generate visual representation images of scatter plots (520; 530) based on the historical time series sensor data, each scatter plot (520; 530) including a specific pair of time series sensor data for the plurality of sensors (230; 250) determined;
assign a root cause label to each image based on a reference to a digitized knowledge domain associated with the industrial asset (105) and in combination with data patterns in each image;
generate a convolutional neural network, CNN, model trained using a first subset of the labeled images and tested based on a second subset of the labeled images applied to the trained model, the first and second sets of images being distinct from each other;
process, by the CNN model, a real-time image to detect at least one anomaly in the real-time image and one or more root causes associated with the at least one anomaly, the real-time image including visual representations of real-time time series sensor data for an industrial asset (105) relating to the historical time series sensor data;
persist a record of the at least one detected anomaly and the one or more root causes associated therewith; and
transmit a representation of the record to a device that invokes an action in response to the one or more root causes indicated in the record.

11. The system of claim 10, wherein the industrial asset (105) is at least one wind turbine system.

12. The system of claims 10-11, wherein the generation of the images of the scatter plot (520; 530) comprises one or more of the following:
specifying a layout and size for each image;
assigning each scatter plot (520; 530) to a particular layout location in each image;
representing data in the scatter plots (520; 530) as pixel values based on at least one of a binary scale and a continuous scale; and
scaling at least one axis of the scatter plots (520; 530) to adjust a magnification of the visual representation thereof in the images.

13. The system of claims 10-12, wherein the processor (2110) executes the processor-executable program code in order to cause the system to further add, as a reference baseline, a comparative scatter plot to each scatter plot (520; 530), wherein the generated image includes a multi-layer image.

14. The system of claims 10-13, wherein the CNN model is defined by a combination of specified characteristics, the characteristics including a number of layers for the model, number of nodes for each layer for the model, inter-connections between the layers for the model, and transfer functions between the layers for the model.

15. The system of claims 10-14, wherein the processor (2110) executes the processor-executable program code in order to cause the system to further cross-validate the model based on a thirdset of the labeled images.

## Patentansprüche

1. Computerimplementiertes Verfahren, das mit der Erfassung von Anomalien und der Identifizierung der Grundursache einer industriellen Anlage (105) assoziiert ist, wobei das Verfahren umfasst:
Empfangen von historischen Zeitseriensensordaten, die mit dem Betrieb einer industriellen Anlage (105) assoziiert sind, wobei die Sensordaten Werte für eine Vielzahl von Sensoren (230; 250) über einen Zeitraum enthalten;
Erzeugen visueller Darstellungsbilder von Streudiagrammen (520; 530) auf der Grundlage der historischen Zeitseriensensordaten, wobei jedes Streudiagramm (520; 530) ein spezifisches Paar von Zeitseriensensordaten für die Vielzahl der ermittelten Sensoren (230; 250) enthält;
Zuweisen einer Grundursachenkennzeichnung zu jedem Bild auf der Grundlage eines Verweises auf eine digitalisierte Wissensdomäne, die mit der industriellen Anlage (105) assoziiert ist, und in Kombination mit Datenmustern in jedem Bild;
Erzeugen eines neuronalen Faltungsnetzwerk (CNN)-Models, das unter Verwendung einer ersten Teilmenge der gekennzeichneten Bilder trainiert und auf der Grundlage einer zweiten Teilmenge der gekennzeichneten Bilder, die auf das trainierte Modell angewandt werden, getestet wird, wobei die erste und die zweite Gruppe von Bildern voneinander verschieden sind;
Verarbeiten eines Echtzeitbildes durch das CNN-Modell, um mindestens eine Anomalie in dem Echtzeitbild und eine oder mehrere Grundursachen, die mit der mindestens einen Anomalie assoziiert sind, zu erkennen, wobei das Echtzeitbild visuelle Darstellungen von Echtzeit-Zeitseriensensordaten für eine industrielle Anlage (105) in Bezug auf die historischen Zeitseriensensordaten enthält;
Speichern einer Aufzeichnung der mindestens einen erfassten Anomalie und der einen oder mehreren damit verbundenen Grundursachen; und
Übertragen einer Darstellung der Aufzeichnung an ein Gerät, das eine Aktion als Reaktion auf die eine oder die mehreren in der Aufzeichnung angegebenen Grundursachen aufruft.

2. Verfahren nach Anspruch 1, wobei die industrielle Anlage (105) mindestens ein Windturbinensystem ist.

3. Verfahren nach Anspruch 1 bis 2, wobei das Erzeugen der Bilder der Streudiagramme (520; 530) eines oder mehreres von Folgendem umfasst:
Spezifizieren eines Layouts und einer Größe für jedes Bild;
Zuordnen jedes Streudiagramms (520; 530) zu einer bestimmten Layoutposition in jedem Bild;
Darstellen von Daten in den Streudiagrammen (520; 530) als Pixelwerte auf der Grundlage von mindestens einer von einer binären Skala und einer kontinuierlichen Skala; und
Skalieren mindestens einer Achse der Streudiagramme (520; 530), um eine Vergrößerung der visuellen Darstellung derselben in den Bildern einzustellen.

4. Verfahren nach einem der vorhergehenden Ansprüche ferner umfassend Hinzufügen eines Vergleichsstreudiagramms als Referenzbasislinie zu jedem Streudiagramm (520; 530), wobei das erzeugte Bild ein Mehrschichtbild enthält.

5. Verfahren nach einem der vorhergehenden Ansprüche, wobei das CNN-Modell durch eine Kombination von spezifizierten Charakteristika definiert ist, wobei die Charakteristika eine Anzahl von Schichten für das Modell, eine Anzahl von Knoten für jede Schicht für das Modell, Zwischenverbindungen zwischen den Schichten für das Modell und Übertragungsfunktionen zwischen den Schichten für das Modell umfassen.

6. Verfahren nach einem der vorhergehenden Ansprüche ferner umfassend die Kreuzvalidierung des Modells auf der Grundlage eines dritten Satzes von gekennzeichneten Bildern.

7. Verfahren nach einem der vorhergehenden Ansprüche ferner umfassend Bereitstellen mindestens eines Teils der Aufzeichnung der mindestens einen erfassten Anomalie und der einen oder mehreren damit assoziierten Grundursachen an das Modell, um mindestens eines zu unterstützen von Nachverfolgung einer Genauigkeit des Modells, kontinuierliche Aktualisierung des ersten Satzes der gekennzeichneten Bilder zum Trainieren des Modells, Neuabstimmung des Modells und Kombinationen davon.

8. Verfahren nach einem der vorhergehenden Ansprüche, wobei das Modell Datenmuster in jedem Bild erkennt, die auf mindestens eine Anomalie hinweisen, und die mindestens eine Anomalie mit der einen oder den mehreren Grundursachen assoziiert, die mit der erkannten mindestens einen Anomalie assoziiert sind.

9. Verfahren nach Anspruch 8, wobei das Modell Datenmuster auf der Grundlage einer Vielzahl von Streudiagrammen (520; 530) erkennt, die in jedem der Bilder enthalten sind.

10. System (400; 2100), umfassend:
einen Speicher, der prozessorausführbaren Programmcode speichert; und
einen Prozessor (2110) zum Ausführen des prozessorausführbaren Programmcodes, um das System zu veranlassen zum:
Empfangen von historischen Zeitserien-Sensordaten, die mit dem Betrieb einer industriellen Anlage (105) assoziiert sind, wobei die Sensordaten Werte für eine Vielzahl von Sensoren (230; 250) über einen Zeitraum enthalten;
visuelle Darstellungsbilder von Streudiagrammen (520; 530) auf der Grundlage der historischen Zeitreihensensordaten zu erzeugen, wobei jedes Streudiagramm (520; 530) ein bestimmtes Paar von Zeitreihensensordaten für die Vielzahl von Sensoren (230; 250) enthält;
Zuweisen einer Grundursachenkennzeichnung zu jedem Bild auf der Grundlage eines Verweises auf eine digitalisierte Wissensdomäne, die mit der industriellen Anlage (105) verbunden ist, und in Kombination mit Datenmustern in jedem Bild;
Erzeugen eines neuronalen Faltungsnetzwerk (CNN)- Models, das unter Verwendung einer ersten Teilmenge der gekennzeichneten Bilder trainiert und auf der Grundlage einer zweiten Teilmenge der gekennzeichneten Bilder, die auf das trainierte Modell angewendet werden, getestet wird, wobei die erste und die zweite Gruppe von Bildern voneinander verschieden sind;
Verarbeiten eines Echtzeitbildes durch das CNN-Modell, um mindestens eine Anomalie in dem Echtzeitbild und eine oder mehrere Grundursachen, die mit der mindestens einen Anomalie assoziiert sind, zu erkennen, wobei das Echtzeitbild visuelle Darstellungen von Echtzeit-Zeitseriensensordaten für eine industrielle Anlage (105) in Bezug auf die historischen Zeitseriensensordaten enthält;
Aufrechterhalten einer Aufzeichnung der mindestens einen erkannten Anomalie und der einen oder mehreren damit verbundenen Grundursachen; und
Übertragen einer Darstellung der Aufzeichnung an ein Gerät, die eine Aktion als Reaktion auf die eine oder die mehreren in der Aufzeichnung angegebenen Grundursachen aufruft.

11. System nach Anspruch 10, wobei die industrielle Anlage (105) mindestens ein Windturbinensystem ist.

12. System nach Anspruch 10-11, wobei die Erzeugung der Bilder des Streudiagramms (520; 530) eines oder mehreres von Folgendem umfasst:
Spezifizieren eines Layouts und einer Größe für jedes Bild;
Zuordnen jedes Streudiagramms (520; 530) zu einer bestimmten Layoutposition in jedem Bild;
Darstellen von Daten in den Streudiagrammen (520; 530) als Pixelwerte auf der Grundlage von mindestens einer von einer binären Skala und einer kontinuierlichen Skala; und
Skalieren mindestens einer Achse der Streudiagramme (520; 530), um eine Vergrößerung der visuellen Darstellung derselben in den Bildern einzustellen.

13. System nach Anspruch 10 bis 12, wobei der Prozessor (2110) den vom Prozessor ausführbaren Programmcode ausführt, um das System zu veranlassen, ferner als eine Referenzbasislinie ein Vergleichsstreuungsdiagramm zu jedem Streuungsdiagramm (520; 530) hinzuzufügen, wobei das erzeugte Bild ein Mehrschichtbild enthält.

14. System nach Anspruch 10 bis 13, wobei das CNN-Modell durch eine Kombination von spezifizierten Charakteristika definiert ist, wobei die Charakteristika eine Anzahl von Schichten für das Modell, eine Anzahl von Knoten für jede Schicht für das Modell, Zwischenverbindungen zwischen den Schichten für das Modell und Übertragungsfunktionen zwischen den Schichten für das Modell umfassen.

15. System nach einem der Ansprüche 10 bis 14, wobei der Prozessor (2110) den vom Prozessor ausführbaren Programmcode ausführt, um das System zu veranlassen, das Modell auf der Grundlage eines dritten Satzes von gekennzeichneten Bildern weiter zu validieren.

## Revendications

1. Procédé mis en oeuvre par ordinateur associé à une détection d'anomalies et à une identification de cause profonde d'un actif industriel (105), le procédé comprenant :
la réception de données de capteur de série temporelle historiques associées au fonctionnement d'un actif industriel (105), les données de capteur comportant des valeurs pour une pluralité de capteurs (230 ; 250) sur une période de temps ;
la génération d'images de représentation visuelle de diagrammes de dispersion (520 ; 530) sur la base des données de capteur de série temporelle historiques, chaque diagramme de dispersion (520 ; 530) comportant une paire spécifique de données de capteur de série temporelle pour la pluralité de capteurs (230 ; 250) déterminée ;
l'attribution d'une étiquette de cause profonde à chaque image sur la base d'une référence à un domaine de connaissances numérisé associé à l'actif industriel (105) et en combinaison avec des motifs de données dans chaque image ;
la génération d'un modèle de réseau neuronal à convolution (CNN) entraîné à l'aide d'un premier sous-ensemble des images étiquetées et testé sur la base d'un second sous-ensemble des images étiquetées appliqué au modèle entraîné, les premier et deuxième ensembles d'images étant distincts l'un de l'autre ;
traiter, par le modèle CNN, une image en temps réel pour détecter au moins une anomalie dans l'image en temps réel et une ou plusieurs causes profondes associées à l'au moins une anomalie, l'image en temps réel comportant des représentations visuelles de données de capteur de série temporelle en temps réel pour un actif industriel (105) concernant les données de capteur de série temporelle historiques ;
la sauvegarde d'un enregistrement de l'au moins une anomalie détectée et de la ou des causes profondes associées à celle-ci ; et
la transmission d'une représentation de l'enregistrement à un dispositif qui appelle une action en réponse à la ou aux causes profondes indiquées dans l'enregistrement.

2. Procédé selon la revendication 1, dans lequel l'actif industriel (105) est au moins un système d'éolienne.

3. Procédé selon les revendications 1 à 2, dans lequel la génération des images des diagrammes de dispersion (520 ; 530) comprend un ou plusieurs des éléments suivants :
la spécification d'une disposition et d'une taille pour chaque image ;
l'attribution de chaque diagramme de diffusion (520 ; 530) à un emplacement de disposition particulier dans chaque image ;
la représentation des données dans les diagrammes de dispersion (520 ; 530) en guise de valeurs de pixel sur la base d'au moins l'une parmi une échelle binaire et une échelle continue ; et
la mise à l'échelle de l'au moins un axe des diagrammes de dispersion (520 ; 530) pour ajuster un grossissement de la représentation visuelle de celui-ci dans les images.

4. Procédé selon l'une quelconque des revendications précédentes, comprenant en outre l'ajout, en guise de ligne de base de référence, d'un diagramme de dispersion comparatif à chaque diagramme de dispersion (520 ; 530), dans lequel l'image générée comporte une image multicouche.

5. Procédé selon l'une quelconque des revendications précédentes, dans lequel le modèle CNN est défini par une combinaison de caractéristiques spécifiées, les caractéristiques comportant un nombre de couches pour le modèle, un nombre de noeuds pour chaque couche pour le modèle, des interconnexions entre les couches pour le modèle, et des fonctions de transfert entre les couches pour le modèle.

6. Procédé selon l'une quelconque des revendications précédentes, comprenant en outre la validation croisée du modèle sur la base d'un troisième ensemble des images étiquetées.

7. Procédé selon l'une quelconque des revendications précédentes, comprenant en outre la fourniture d'au moins une partie de l'enregistrement de l'au moins une anomalie détectée et de la ou des causes profondes associées à celui-ci au modèle pour aider à au moins l'un parmi le suivi d'une précision du modèle, la mise à jour continue du premier ensemble des images étiquetées pour entraîner le modèle, le re-réglage dumodèle, et des combinaisons de ceux-ci.

8. Procédé selon l'une quelconque des revendications précédentes, dans lequel le modèle reconnaît des motifs de données dans chaque image indiquant au moins une anomalie et classifie l'au moins une anomalie avec la ou les causes profondes associées à l'au moins une anomalie reconnue.

9. Procédé selon la revendication 8, dans lequel le modèle reconnaît des motifs de données sur la base d'une pluralité des diagrammes de dispersion (520 ; 530) inclus dans chacune des images.

10. Système (400 ; 2100), comprenant :
une mémoire stockant un code de programme exécutable par processeur ; et
un processeur (2110) pour exécuter le code de programme exécutable par un processeur afin d'amener le système à :
recevoir des données de capteur de série temporelle historiques associées au fonctionnement d'un actif industriel (105), les données de capteur comportant des valeurs pour une pluralité de capteurs (230 ; 250) sur une période de temps ;
générer des images de représentation visuelle de diagrammes de dispersion (520 ; 530) sur la base des données de capteur de série temporelle historiques, chaque diagramme de dispersion (520 ; 530) comportant une paire spécifique de données de capteur de série temporelle pour la pluralité de capteurs (230 ; 250) déterminée ;
attribuer une étiquette de cause profonde à chaque image sur la base d'une référence à un domaine de connaissances numérisé associé à l'actif industriel (105) et en combinaison avec des motifs de données dans chaque image ;
générer un modèle de réseau neuronal à convolution (CNN) entraîné à l'aide d'un premier sous-ensemble des images étiquetées et testé sur la base d'un second sous-ensemble des images étiquetées appliqué au modèle entraîné, les premier et deuxième ensembles d'images étant distincts l'un de l'autre ;
traiter, par le modèle CNN, une image en temps réel pour détecter au moins une anomalie dans l'image en temps réel et une ou plusieurs causes profondes associées à l'au moins une anomalie, l'image en temps réel comportant des représentations visuelles de données de capteur de série temporelle en temps réel pour un actif industriel (105) concernant les données de capteur de série temporelle historiques ;
conserver un enregistrement de l'au moins une anomalie détectée et de la ou des causes profondes associées à celle-ci ; et
transmettre une représentation de l'enregistrement à un dispositif qui appelle une action en réponse à la ou aux causes racines indiquées dans l'enregistrement.

11. Système selon la revendication 10, dans lequel l'actif industriel (105) est au moins un système d'éolienne.

12. Système selon les revendications 10 à 11, dans lequel la génération des images du diagramme de dispersion (520 ; 530) comprend un ou plusieurs des éléments suivants :
la spécification d'une disposition et d'une taille pour chaque image ;
l'attribution de chaque diagramme de diffusion (520 ; 530) à un emplacement de disposition particulier dans chaque image ;
la représentation des données dans les diagrammes de dispersion (520 ; 530) en guise de valeurs de pixel sur la base d'au moins l'une parmi une échelle binaire et une échelle continue ; et
la mise à l'échelle de l'au moins un axe des diagrammes de dispersion (520 ; 530) pour ajuster un grossissement de la représentation visuelle de celui-ci dans les images.

13. Système selon les revendications 10 à 12, dans lequel le processeur (2110) exécute le code de programme exécutable par processeur pour amener le système à ajouter en outre, en tant que ligne de base de référence, un diagramme de dispersion comparatif à chaque diagramme de dispersion (520 ; 530), dans lequel l'image générée comporte une image multicouche.

14. Système selon les revendications 10 à 13, dans lequel le modèle CNN est défini par une combinaison de caractéristiques spécifiées, les caractéristiques comportant un nombre de couches pour le modèle, un nombre de noeuds pour chaque couche pour le modèle, des interconnexions entre les couches pour le modèle, et des fonctions de transfert entre les couches pour le modèle.

15. Système selon les revendications 10 à 14, dans lequel le processeur (2110) exécute le code de programme exécutable par processeur afin d'amener le système à procéder en outre à la validation croisée du modèle sur la base d'un troisième ensemble des images étiquetées.
